# EUROPEAN PATENT SPECIFICATION

(11) **EP 0 751 375 B1**
(45) Date of publication and mention of the grant of the patent: **24.10.2001**
(21) Application number: 96110315.7
(22) Date of filing: 26.06.1996
(51) Int. Cl.: G01C 19/56

(54) **Vibrating gyroscope**
Vibrationskreisel
Gyroscope à vibration

(30) Priority: 26.06.1995 JP 15953095
(43) Date of publication of application: 02.01.1997
(73) Proprietor: MURATA MANUFACTURING CO., LTD., Nagaokakyo-shi Kyoto-fu 226 (JP)
(72) Inventor: Ebara, Kazuhiro, Nagaokakyo-shi, Kyoto-fu (JP); Fujimoto, Katsumi, Nagaokakyo-shi, Kyoto-fu (JP); Nishiyama, Hiroshi, Nagaokakyo-shi, Kyoto-fu (JP); Tabuchi, Makoto, Nagaokakyo-shi, Kyoto-fu (JP); Tanaka, Hirofumi, Nagaokakyo-shi, Kyoto-fu (JP)
(74) Representative: Schoppe, Fritz, Dipl.-Ing.

(56) References cited:
- EP-A- 0 520 467

## Description

### BACKGROUND OF THE INVENTION

### 1. Field of the Invention

The present invention relates to a vibrating gyroscope which can be used for a navigation system that provides navigational guidance by detecting a rotational angular velocity to detect the position of a moving object, or used for an anti-vibration system such as a camera-shake prevention apparatus that prevents the adverse effects of shaking by detecting a rotational angular velocity due to external vibration, such as camera shake.

### 2. Description of the Related Art

The configuration of a conventional vibrating gyroscope will be described by referring to Figs. 7 and 8, see also EP-A-0 520 467.

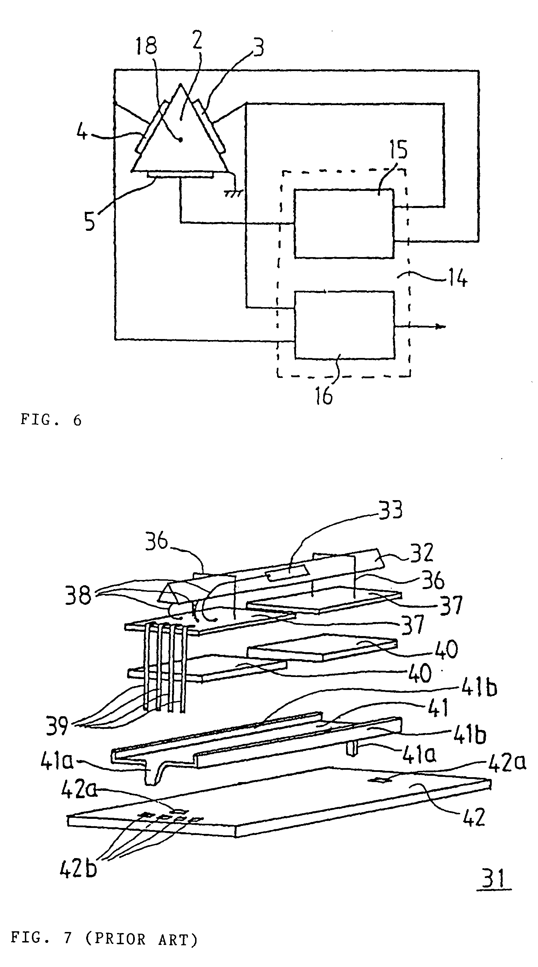

In the figures, a vibrating gyroscope 31 includes a vibrator 32. The vibrator 32 is formed in a regular triangular prism shape by, for example, permanently elastic metal materials such as elinvar and materials generating mechanical vibration such as quartz, glass, crystal, and ceramic. Piezoelectric elements 33 and 34 for driving and detection are provided at side faces adjacent to each other by means of adhesion or the like, and a feedback piezoelectric element 35 is provided at the other side face by means of adhesion or the like. Located near nodes of the vibrator 32, on the ridge line located between the piezoelectric elements 33 and 34, are square-bottomed U-shaped supporting pins 36 made of metal wire or the like, the middle sections of the support pins 36 being secured to the ridge line by means of welding or the like. Both ends of the support pins 36 are inserted in insertion holes (not shown) of mounting substrates 37, 37 and secured by means of soldering or the like. In this way, the vibrator 32 is supported by and secured to the mounting substrates 37. The mounting substrates 37, which may be of glass epoxy, for example, are formed in an almost rectangular shape and have conductive sections (not shown). At the conductive section of one mounting substrate 37, the piezoelectric elements 33 to 35 of the vibrator 32 are electrically connected through leads 38. Additionally, ends of lead frames 39 are connected and secured to the conductive section. The mounting substrates 37 are adhered and secured to a base 41 with shock absorbers 40 being inserted between them. The shock absorbers 40 are formed in an almost rectangular shape and are made of a material having elasticity due to a number of minute air gaps formed inside which are made by foaming rubber, such as butyl rubber, or synthetic resin, such as urethane, such that each air bubble does not join another air bubble, that is, so-called independent foaming. The base 41 is formed in an almost rectangular shape by a metal such as nickel. At the centers of both ends in the longitudinal direction, insertion pieces 41a extending in the direction (downward in Fig. 7) opposed to the surface on which the shock absorbers 40 are disposed are provided. Hold pieces 41b are formed by folding both ends in the width direction, in the same direction (upwards in Fig. 7) as the surface on which the shock absorbers 40 are disposed. The hold pieces 41b hold from the sides the mounting substrates 37 and the shock absorbers 40 adhered and secured to the base 41.

The base 41 is adhered and secured to a circuit board 42. The circuit board 42, which may be made, for example, of glass epoxy, is formed in an almost rectangular shape and has an oscillation circuit (not shown) for applying a drive signal to the vibrator 32 and a detection circuit (not shown) for detecting a rotation angular velocity of the vibrator 32 when it is rotated. In the vicinity of one end of the circuit board 42 in the longitudinal direction, an insertion hole 42a corresponding to one of the insertion pieces 41a is formed, and in the vicinity of the other end of the circuit board 42 in the longitudinal direction, an insertion hole 42a corresponding to the other insertion piece 41a is formed, as are through holes 42b for the lead frames 39. The insertion pieces 41a of the base 41 are inserted into the insertion holes 42a and secured by soldering or the like. By inserting the other ends of the lead frames 39 into the through holes 42b and securing them by soldering or the like, the piezoelectric elements 33 to 35 of the vibrator 32 are electrically connected to the oscillation circuit and the detection circuit disposed on the circuit board 42.

As described above, since the shock absorbers 40 disposed between the mounting substrates 37 and the base 41 absorb vibration in the vibrating gyroscope 31, transfer to the base 41 and the circuit board 42 of vibration transferred from the vibrator 32 to the mounting substrates 37 is restricted and transfer of vibration from the outside of the vibrating gyroscope is also restricted. Therefore, noise and malfunction are prevented.

In the vibrating gyroscope 31, when the gyroscope is cleaned to remove chipping made in trimming the vibrator 32 in order to adjust the resonance frequency and to remove solder debris and flux used in soldering, the shock absorbers 40 disposed between the mounting substrates 37 and the circuit board 42 absorb water to expand because they are made from a material in which air gaps are formed by independent foaming. The thickness of the shock absorber becomes large and as a result the dimensions of the vibrating gyroscope 31 may fluctuate.

### SUMMARY OF THE INVENTION

It is therefore an object of the present invention to provide a vibrating gyroscope which does not require shock absorbers for absorbing vibration of mounting substrates.

A vibrating gyroscope according to the present invention is defined in claim 1.

According to the present invention, the mounting substrate and the circuit board are connected through support means which provides an air gap between the substrate and the board. In other words, the circuit board does not directly touch the mounting substrate. Transfer of vibration of the mounting substrate to the circuit board is restricted when the mounting substrate vibrates due to vibration of the vibrator, and transfer of vibration from the outside of the vibrating gyroscope is also restricted. Therefore, noise and malfunction is prevented. As described above, since transfer of vibration from the mounting substrate to the circuit board is restricted by the air gap, cushions which are conventionally used are not required. The dimensions of the vibrating gyroscope do not change because there is no material (cushions) which absorbs water to expand in cleaning the vibrating gyroscope.

For the purpose of illustrating the invention, there is shown in the drawings several forms which are presently preferred, it being understood, however, that the invention is not limited to the precise arrangements and instrumentalities shown.

### BRIEF DESCRIPTION OF THE DRAWINGS

Fig. 1 is a perspective, exploded view showing a vibrating gyroscope according to an embodiment of the present invention.

Fig. 2 is a side view of the vibrating gyroscope of Fig. 1.

Fig. 3 is an end view illustrating a vibrator used in the vibrating gyroscope shown in Figs. 1 and 2.

Fig. 4A is a top plan view showing a mounting substrate used in the vibrating gyroscope shown in Figs. 1 and 2.

Fig. 4B is a rear plan view showing a mounting substrate used in the vibrating gyroscope shown in Figs. 1 and 2.

Figs. 5A and 5B are perspective views of a manufacturing process of the mounting substrate shown in Fig. 4.

Fig. 6 is a circuit diagram of the vibrating gyroscope shown in Figs. 1 and 2.

Fig. 7 is a perspective view of a conventional vibrating gyroscope.

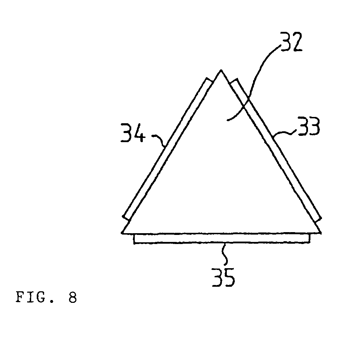

Fig. 8 is an end view showing a vibrator used in the conventional vibrating gyroscope.

### DETAILED DESCRIPTION OF PREFERRED EMBODIMENT(S)

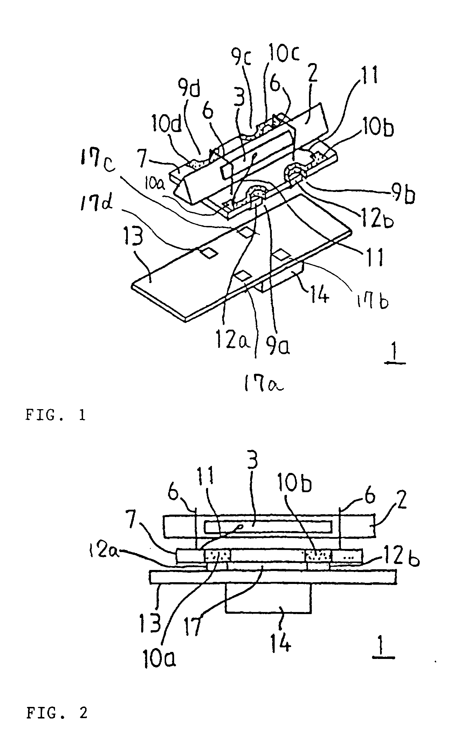

An embodiment of a vibrating gyroscope according to the present invention will be described below by referring to Figs. 1 to 4B. A vibrating gyroscope 1 includes a vibrator 2. The vibrator 2 is formed in a regular triangular prism shape and may be made, for example, of a permanently elastic metal material, such as elinvar and a material generating mechanical vibration such as quartz, glass, crystal, or ceramic. Piezoelectric elements 3 and 4 for driving and detection are provided at side faces adjacent to each other by means of adhesion or the like, and a feedback piezoelectric element 5 is provided at the other side face by means of adhesion or the like.

The vibrator 2 is supported by two support pins 6 secured to the mounting substrate 7. The support pins 6 are formed in a square bottomed U-shape and are made of a permanently elastic metal wire, such as tungsten. The mounting substrate 7, which may, for example, be made of glass epoxy, is formed in an almost rectangular shape and has insertion holes 8 on one main surface. The middle section of each support pin 6 is secured near a node of the vibrator 2 on the ridgeline located between the piezoelectric elements 3 and 4. The ends of the support pins 6 are inserted into the insertion holes 8 and secured by means of soldering or the like. In this way, the vibrator 2 is supported by and secured to the mounting substrate 7.

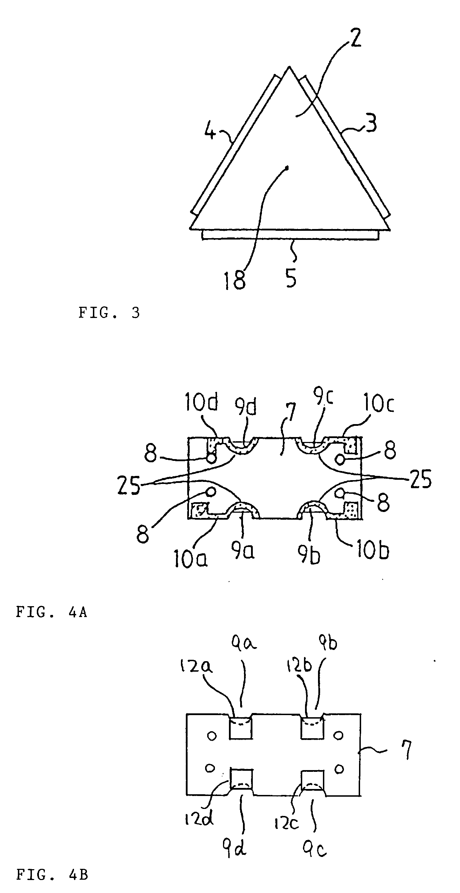

As shown in Figs 4A and 4B, at edges of the mounting substrate 7, semi-circular-shaped notches opposing each other, 9a and 9b, and 9c and 9d, are provided. By providing the inner peripheral surfaces of the notches 9a to 9d with conductors 25, connection electrodes 10a to 10d are formed. The connection electrodes 10a to 10c extend from the peripheral edges of the notches 9a to 9c along edges of the mounting substrate 7 on one main surface of the mounting substrate 7, and the connection electrode 10d extends from the peripheral edge of the notch 9 to the peripheral edge of an insertion hole 8.

At the other main surface of the mounting substrate 7, four support members 12a to 12d are provided in the vicinity of notches 9a to 9c, respectively so that the support members 12a to 12d partially overlap the notches 9a to 9c. The support members 12 are made of a conductive film having a thickness, for example, 0.05 mm and electrically connected to the inner peripheral surfaces of the notches 9a to 9d, whereby the electrodes 10a to 10d are electrically connected to the support members 12a to 12 d, respectively.

The mounting substrate 7 configured as described above is manufactured, for example, in the following way.

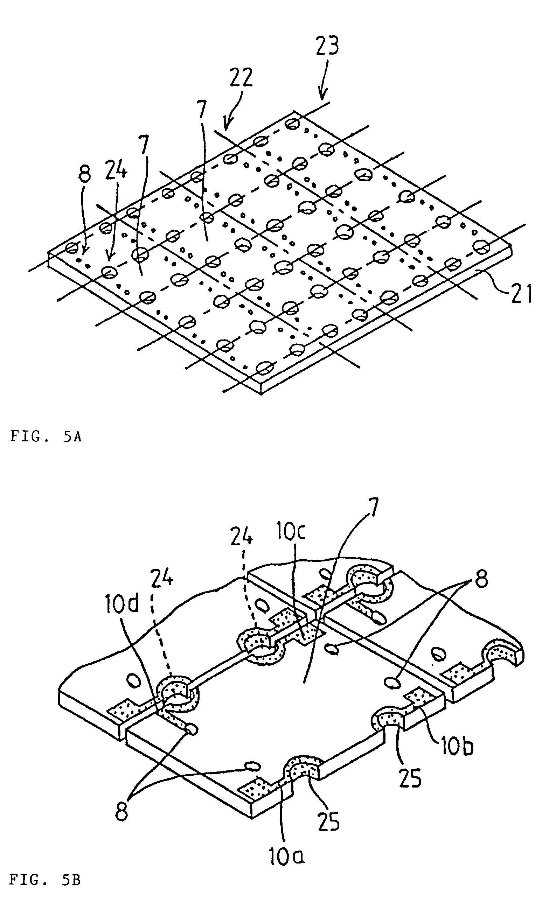

First, referring to Figs. 5A and 5B, a mother board 21 formed in a rectangular shape and made of glass epoxy or the like is prepared. The mother board 21 including a plurality of unseparated mounting substrates 7 partitioned by cutting lines 22 and 23. Next, at each of the mounting substrates 7 the insertion holes 8 and through holes 24 are formed. The through holes 24 are formed such that the openings thereof are disposed on the cutting line 23. Conductors 25 are applied to the inner peripheral surfaces and the front peripheral edges of the openings of the through holes 24 and portions of the front surface of the mother board 21 along the cutting line 23. The conductor 25 serving as the connection electrode 10d of each mounting substrate 7 extends to an insertion hole 8. The support members 12a to 12d are attached at the rear peripheral edges of the openings of the respective through holes 24.

Referring to Figs. 4A and 4B, the mother board 21 is cut and divided along the cutting lines 22 and 23 to obtain a plurality of the mounting substrates 7. By dividing the through holes 24, the semi-circle-shaped notches 9a to 9d of each mounting substrate 7 are formed. The conductors 25 exposed at the inner peripheral surfaces of the notches 9a to 9d serve as the connection electrodes 10a to 10d. In this way, a plurality of the mounting substrates 7 having the connection electrodes 10a to 10d and support members 12a to 12d are obtained.

Referring back to Figs. 1 and 2, the piezoelectric element 3 on the vibrator 2 and the connection electrode 10a, the piezoelectric element 4 and the connection electrode 10b, and the piezoelectric element 5 and the connection electrode 10c are electrically connected through lead wire 11, respectively, and the vibrator 2 and the connection electrode 10d are electrically connected through the support pins 6.

The mounting substrate 7 is connected to a circuit board 13. The circuit board 13, which may be made of a glass epoxy, for example, is formed in an almost rectangular shape and has pads 17a to 17d on one main surface and an integrated circuit 14 on the other main surface. The integrated circuit 14 includes an oscillation circuit 15 for driving and vibrating the vibrator 2 and a detection circuit 16 for detecting the displacement of the vibrator 2, as shown in Fig. 6. The pads 17a to 17d are electrically connected to the integrated circuit 14.

The mounting substrate 7 and the circuit board 13 are connected such that the support members 12a to 12d are connected and secured to the pads 17a to 17d of the circuit board 13, respectively, by means of soldering or the like and an air gap 17 having, for example, a thickness of 0.05 mm is formed by the support members 12a to 12d between the substrate 7 and the board 13. The connection electrodes 10a to 10d and the circuit board 13 are electrically connected through the support members 12 and the pads 17a to 17d. In other words, the vibrator 2 and the piezoelectric elements 3 to 5 are electrically connected to the circuit board 13. More specifically, the vibrator 2 is grounded, the piezoelectric element 5 is connected to the input terminal of the oscillation circuit 15, and the piezoelectric elements 3 and 4 are connected to the output terminals of the oscillation circuit 15 and to the input terminals of the detection circuit 16.

When the oscillation circuit 15 applies a drive signal to the piezoelectric element 5, the vibrator 2 vibrates under a bending mode in the direction perpendicular to the surface on which the piezoelectric element 5 is formed, and the same signal is output from the piezoelectric elements 3 and 4. When the vibrator 2 rotates about the center axis 18, the direction in which the vibrator 2 vibrates changes due to the effect of the Coriolis force according to the rotation angular velocity. Different signals are output from the piezoelectric elements 3 and 4 in this case, and the rotation angular velocity is detected according to the difference between these output signals.

In the vibrating gyroscope 1 configured as described above, the mounting substrate 7 and the circuit board 13 are connected through the support members 12a to 12d, and the air gap 17 is formed between the substrate 7 and the board 13. In other words, the circuit board 13 does not directly touch the mounting substrate 7. Transfer of vibration of the mounting substrate 7 to the circuit board 13 is restricted when the mounting substrate 7 vibrates due to vibration of the vibrator 2, and transfer of vibration from the outside of the vibrating gyroscope 1 is also restricted. Therefore, noise and malfunction are prevented. As described above, since transfer of vibration from the mounting substrate 7 to the circuit board 13 is restricted by the air gap 17, shock absorbers which are conventionally used are not required. The dimensions of the vibrating gyroscope do not change because there is no material (e.g. cushions) which absorbs water used in cleaning the vibrating gyroscope and which then expands.

In the vibrating gyroscope 1, when the resonance frequency of the vibrator 2 is adjusted, it can be readily measured and adjusted by electrically connecting terminals of a measuring instrument to the connection electrodes 10a to 10d.

In this embodiment, the vibrator having a shape of a prism whose cross section is an equilateral triangle is used. The present invention can also be applied to a vibrating gyroscope including a vibrator having a shape of a prism whose cross section is a quadrangle or the like.

In this embodiment, the support members are made from a conductive film. This invention also includes a vibrating gyroscope having support members made from electrically conductive materials such as solder bumps, metal spacers, or plating, or the like. The present invention further includes a vibrating gyroscope in which the mounting substrate is connected to the circuit board with the use of an electrically conductive adhesive material and an air gap is made between the substrate and the board with this electrically conductive adhesive material being used as support members. In addition, the present invention includes a vibrating gyroscope in which support members are made from insulating members and the connection electrodes are connected to the circuit board with the use of, for example, lead wire or other members.

Moreover, in this embodiment, four support members are used. The present invention includes a vibrating gyroscope in which the mounting substrate and the circuit board are connected through three, or five or more support members.

Still further in this embodiment, the connection electrodes are formed by applying conductors to the notches of the mounting substrate. The present invention includes a vibrating gyroscope in which the connection electrodes are formed by filling the notches with conductors. In this case, the through holes formed in the mother board, which is used as mounting substrates afterwards, are filled with conductors, and the connection electrodes of each mounting substrate are formed by cutting the through holes to expose the conductors placed in the notches. The present invention also includes a vibrating gyroscope in which the connection electrodes are formed by, for example, applying conductors to edges of the mother board or the mounting substrate, without forming notches.

Yet further, in this embodiment, the connection electrodes extend on a main surface of the mounting substrate. The present invention includes a vibrating gyroscope in which only edges or notches of the mounting substrate are provided with connection electrodes.

While preferred embodiments of the invention have been disclosed, various modes of carrying out the principles disclosed herein are contemplated as being within the scope of the following claims. Therefore, it is understood that the scope of the invention is not to be limited except as otherwise set forth in the claims.

## Claims

1. A vibrating gyroscope having:
a prism-shaped vibrator (2) including at least one piezoelectric element (3, 4, 5);
a mounting substrate (7);
at least one support pin (6) mounted near a node of said vibrator (2) for connecting said vibrator (2) to said mounting substrate (7); and
a circuit board (13) having an oscillation circuit (15) for driving said prism-shaped vibrator (2) and a detecting circuit (16) for detecting a displacement of said prism-shaped vibrator (2); **characterised in that**
a plurality of spacers (12a-12d) is disposed between said mounting substrate (7) and said circuit board (13), the spacers providing an air gap between said mounting substrate (7) and said circuit board (13) and supporting said circuit board (13) in spaced relationship with said mounting substrate (7).

2. A vibrating gyroscope according to claim 1, wherein a distance between said mounting substrate (7) and said circuit board (13) is about 0.05 mm.

3. A vibrating gyroscope according to claim 1, wherein said spacers (12a-12d) are electroconductive and electrically connect said mounting substrate (7) and said circuit board (13).

4. A vibrating gyroscope according to claim 1, wherein said. circuit board (13) has a plurality of conductive pads (17a-17d) on a surface thereof, said conductive pads (17a-17d) are electrically connected to said oscillation circuit (15) and detecting circuit (16), and said spacers (12a-12d) are in contact with said conductive pads (17a-17d).

5. A vibrating gyroscope according to claim 4, in which said mounting substrate (7) includes a plurality of notches (9a-9d) on side surfaces thereof, a plurality of conductive patterns are formed in said notches (9a-9d) and electrically connected to said at least one piezoelectric element (3, 4, 5), and said spacers (12a-12d) are in contact with said conductive patterns.

## Patentansprüche

1. Ein Vibrationsgyroskop mit:
einem prismenförmigen Schwingungselement (2), das mindestens ein piezoelektrisches Element (3, 4, 5) umfaßt;
einem Befestigungssubstrat (7);
mindestens einem Trägerstift (6), der in der Nähe eines Knotens des Schwingungselements (2) befestigt ist, zum Verbinden des Schwingungselements (2) mit dem Befestigungssubstrat (7); und
einer Schaltungsplatine (13) mit einer Oszillationsschaltung (15) zum Treiben des prismenförmigen Schwingungselements (2), und einer Erfassungsschaltung (16) zum Erfassen einer Verschiebung des prismenförmigen Schwingungselements (2);
**dadurch gekennzeichnet, daß**
zwischen dem Befestigungssubstrat (7) und der Schaltungsplatine (13)eine Mehrzahl von Abstandhaltern (12a - 12d) angeordnet ist, wobei die Abstandhalter einen Luftzwischenraum zwischen dem Befestigungssubstrat (7) und der Schaltungsplatine (13) liefern und die Schaltungsplatine (13) in einer beabstandeten Beziehung zu dem Befestigungssubstrat (7) tragen.

2. Ein Vibrationsgyroskop gemäß Anspruch 1, bei dem ein Abstand zwischen dem Befestigungssubstrat (7) und der Schaltungsplatine (13) etwa 0,05 mm beträgt.

3. Ein Vibrationsgyroskop gemäß Anspruch 1, bei dem die Abstandhalter (12a - 12d) elektrisch leitfähig sind und das Befestigungssubstrat (7) und die Schaltungsplatine (13) elektrisch verbinden.

4. Ein Vibrationsgyroskop gemäß Anspruch 1, bei dem die Schaltungsplatine (13) auf einer Oberfläche derselben eine Mehrzahl von leitfähigen Anschlußflächen (17a - 17d) aufweist, wobei die leitfähigen Anschlußflächen (17a - 17d) mit der Oszillatorschaltung (15) und der Erfassungsschaltung (16) elektrisch verbunden, und sich die Abstandshalter (12a - 12d) in Kontakt mit den leitfähigen Anschlußflächen (17a - 17d) befinden.

5. Ein Vibrationsgyroskop gemäß Anspruch 4, bei dem das Befestigungssubstrat (7) auf Seitenoberflächen desselben eine Mehrzahl von Einkerbungen (9a - 9d) umfaßt, bei dem in den Einkerbungen (9a - 9d) eine Mehrzahl von leitfähigen Strukturen gebildet und mit mindestens einem piezoelektrischen Element (3, 4, 5) elektrisch verbunden ist, und bei dem sich die Abstandhalter (12a - 12d) in Kontakt mit den leitfähigen Strukturen befinden.

## Revendications

1. Gyroscope vibrant, possédant :
un vibrateur (2) en forme de prisme comprenant au moins un élément piézoélectrique (3, 4, 5),
un substrat de montage (7),
au moins une broche de support (6) montée près d'un noeud du vibrateur (2) pour la connexion du vibrateur (2) au substrat de montage (7), et
une carte de circuit (13) ayant un circuit d'oscillation (15) destiné à piloter le vibrateur (2) en forme de prisme et un circuit de détection (16) destiné à détecter un déplacement du vibrateur en forme de prisme (2), **caractérisé en ce que**
plusieurs entretoises (12a-12d) sont disposés entre le substrat de montage (7) et la carte de circuit (13), les entretoises formant un espace entre le substrat de montage (7) et la carte de circuit (13) et supportant la carte de circuit (13) à distance du substrat de montage (7).

2. Gyroscope vibrant selon la revendication 1, dans lequel la distance comprise entre le substrat de montage (7) et la carte de circuit (13) est d'environ 0,05 mm.

3. Gyroscope vibrant selon la revendication 1, dans lequel les entretoises (12a-12d) sont conductrices de l'électricité et connectent électriquement le substrat de montage (7) et la carte de circuit (13).

4. Gyroscope vibrant selon la revendication 1, dans lequel la carte de circuit (13) a plusieurs plages conductrices (17a-17d) sur une surface, les plages conductrices (17a-17d) sont connectées électriquement au circuit d'oscillation (15) et au circuit de détection (16), et les entretoises (12a-12d) sont au contact des plages conductrices (17a-17d).

5. Gyroscope vibrant selon la revendication 4, dans lequel le substrat de montage (7) comporte plusieurs encoches (9a-9d) à ses surfaces latérales, plusieurs motifs conducteurs sont formés dans les encoches (9a-9d) et sont connectés électriquement à l'élément piézoélectrique au moins (3, 4, 5), et les entretoises (12a-12d) sont au contact des motifs conducteurs.
